Europäisches Patentamt

European Patent Office

Office européen des brevets

(11) Publication number: 0 365 963

A2

## (12) EUROPEAN PATENT APPLICATION

(21) Application number: 89119158.7

(22) Date of filing: 16.10.89

(51) Int. Cl.5: F16F 1/36 , H02K 5/24

(30) Priority: 28.10.88 IT 4170388

(43) Date of publication of application:
02.05.90 Bulletin 90/18

(84) Designated Contracting States:
AT BE CH DE ES FR GB GR LI LU NL SE

(71) Applicant: ASKOLL S.r.l.
Via Industria 11 Z.I.
I-36030 Povolaro Dueville (Vicenza)(IT)

(72) Inventor: Marioni, Elio
Via G. Rossi
I-36031 Dueville (Vicenza)(IT)
Inventor: Cavalcante, Vittorio
Via XXV Aprile 2
I-36031 Dueville (Vicenza)(IT)

(74) Representative: Modiano, Guido et al
MODIANO, JOSIF, PISANTY & STAUB
Modiano & Associati Via Meravigli, 16
I-20123 Milano(IT)

(54) Self-centering vibration-damping rotor support.

㉗ A self-centering vibration-damping rotor support (1) which can be used particularly but not exclusively for the rotors of electric motors, for example of the permanent-magnet type. The support (1) comprises an inner body (2), constituted by a perforated cylindrical element, inside which the rotating shaft (4) is rotatably coupled, and an outer containment body (6). An elastic annular element (11) is interposed between the two bodies so as to mutually couple them.

Fig. 1

EP 0 365 963 A2

## SELF-CENTERING VIBRATION-DAMPING ROTOR SUPPORT

The present invention relates to a self-centering vibration-damping rotor support which can be used particularly but not exclusively for rotors of electric motors such as for example permanent-magnet motors.

It is known that centrifugal pumps actuated by a permanent-magnet electric motor are currently installed in washing machines, dishwashers and household electrical appliances in general.

In particular, said centrifugal pumps comprise a pump body which extends with a cylindrical chamber containing a permanent-magnet rotor.

The electric part of the motor is completely external to this structure and is not affected by the liquid in any way.

Said rotor is radially associated with a drive shaft; the ends of said shaft which protrude from said rotor are supported by rotor supports with which they are rotatably associated.

The rotor supports are constituted by cylindrical elements rigidly associated with the rotor chamber in which they are inserted.

One end of the drive shaft is associated with an impeller which is contained in a substantially cylindrical chamber which is connected to the rest of the hydraulic circuit.

Some disadvantages are however observed in such known kinds of pump, including one of considerable importance, which arises from the fact that said rotor supports are, upon assembly, usually not mutually aligned and have their axis inclined with respect to the axis of the rotor.

Another considerable disadvantage is due to the fact that the rotation of the permanent-magnet rotor, due to the action of the polar expansions arranged outside its chamber, is combined with a vibrating motion which occurs predominantly in a single direction and has the effect of producing an unpleasant whine due to the presence of metallic powder which deposits between the shaft and the rotor support.

The aim of the present invention is to eliminate the disadvantages described above in the known art by providing a rotor support which has self-centering and vibration-damping characteristics.

A consequent primary object is to provide a rotor support which in its application to centrifugal pumps with a permanent-magnet electric motor eliminates the unpleasant whine which is currently produced during operation.

Another important object is to provide a rotor support which can be applied to any kind of rotating shaft.

Still another object is to provide a rotor support composed of a small number of elements which can be easily assembled.

Not least object is to provide a rotor support which has a modest cost.

This aim, these objects and others which will become apparent hereinafter are achieved by a self-centering vibration-damping rotor support, characterized in that it comprises an inner body, constituted by a perforated cylindrical element, in which a rotating shaft is rotatably associated, and an outer containment body, at least one elastic annular element being interposed between said bodies so as to mutually associate them.

Further characteristics and advantages of the invention will become apparent from the detailed description of an embodiment, illustrated only by way of non-limitative example in the accompanying drawings, wherein:

figure 1 is a sectional side view of a detail of an electric motor to which a rotor support according to the invention is applied;

figure 2 is a sectional exploded side view of a rotor for permanent-magnet electric motors with rotor supports according to the invention in different embodiments for each end of the shaft;

figures 3 and 4 are exploded sectioned isometric views of the rotor supports of figure 2.

With reference to the above described figures, a rotor support according to the invention is generally indicated, in a first embodiment, by the reference numeral 1, and comprises an inner body 2 constituted by a cylindrical element which has an axial hole 3 in which a first end 4 of a rotating shaft rigidly associated with a permanent-magnet rotor 5 is for example rotatably coupled.

Said support 1 furthermore comprises an outer containment body 6 which is substantially coaxial to said body 2 and has a first cylindrical portion 7 which is joined circumferentially to a second portion 8 which is also cylindrical and can be fixed to the structure 9 of the rotor chamber as its outer surface 10 is for example knurled and adapted to engage in an equivalent knurling provided in the inner wall of said chamber.

According to the invention, an elastic annular element 11, for example an "O-ring", is interposed between said inner body 2 and the first portion 7 of the outer body 6, and is accommodated between two toroidal half-grooves, respectively 12 and 13, provided thereon.

Conveniently, the outer diameter of said body 2 and the inner diameter of said body 6 are such as to define some play therebetween, while the coupling between the annular element 11 and the corresponding half-grooves 12 and 13 is of the interfering kind, so that said annular element is prevented from rotating and moving.

In order to facilitate the assembly of the outer body 6 on the inner body 2, after said body 2 has been provided with the elastic element 11, said outer body 6 has an inner flared region 14 defined in its first cylindrical portion 7.

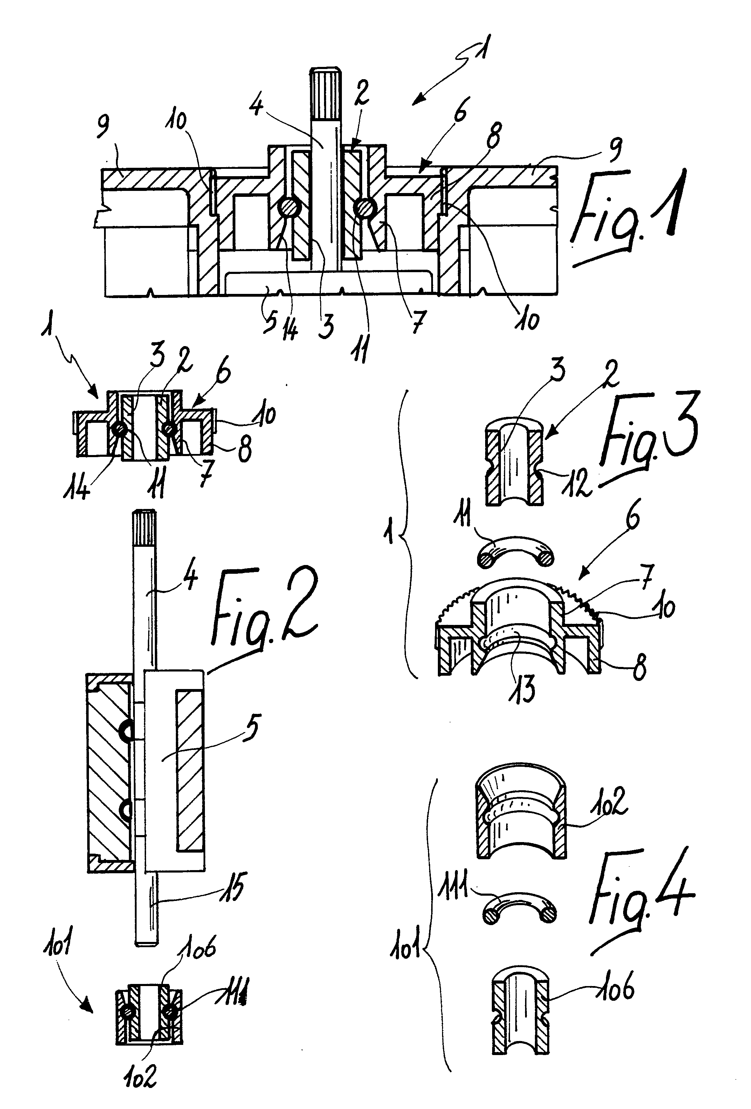

The rotor support for the second end 15 of the rotating shaft, which is generally indicated by 101 in the embodiment of figures 2 and 4, is provided according to the same concept, and substantially comprises an inner body 102 which is constituted by a perforated cylindrical element and an also substantially cylindrical outer containment body 106; an elastic annular element 111 is interposed between said bodies.

As can be seen in the figures, in the second embodiment the rotor support, indicated by 101, is practically equivalent to the one indicated by 1 deprived of the second cylindrical portion 8.

The use of rotor supports according to the invention allows to solve the alignment problems which currently arise; the presence of the elastic annular element in fact allows a certain independence of the inner body with respect to the outer body which is fixed to the structure, so that if the outer body is fixed to said structure and is not aligned with respect to the axis of the shaft, the inner body is able to rotate slightly and align itself independently.

The presence of the elastic annular element furthermore allows to absorb the vibrations caused by the rotation of the shaft and eliminates the unpleasant whine which occurs during the operation of permanent-magnet electric motors used for the centrifugal pumps of household electrical appliances.

It is therefore evident that the invention achieves the intended aim and objects.

The invention is furthermore obtained with simple elements, which can be produced for example by injection-molding of thermoplastic materials, and with an elastomer annular element.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Self-centering and vibration-damping rotor support, characterized in that it comprises an inner body (2,102) constituted by a perforated cylindrical element, in which a rotating shaft (4,15) is rotatably associated, said rotating shaft having a supporting structure (9), and an outer containment body (6,106), at least one elastic annular element (11,111) being interposed between said bodies so as to mutually associate them.

2. Rotor support according to claim 1, characterized in that said outer body (6) is rigidly associated with said supporting structure (9) of the shaft and is separate therefrom.

3. Rotor support according to claim 1, characterized in that said outer body (106) is monolithic with said shaft supporting structure.

4. Rotor support according to claim 1, chracterized in that said outer body containment surface for said inner body is cylindrical, the coupling between said bodies having some play.

5. Rotor support according to claim 1, characterized in that said at least one elastic annular element (11) is interferingly accommodated between toroidal half-grooves (12,13) provided on said inner body (2) and on said outer body (6), rotational and axial translatory motion being prevented for said at least one annular element.

6. Rotor support according to claim 1, characterized in that said elastic annular element (11,111) is an "O-ring".

7. Rotor support, characterized in that said outer body (6) has an inner flared region (14) adapted to facilitate the assembly of said at least one annular element (11).

8. Rotor support, characterized in that said inner body (2) can perform small movements with respect to said outer body (6).

Fig.1

Fig.2

Fig.3

Fig.4